Europäisches Patentamt

European Patent Office

Office européen des brevets

(19)

(11) **EP 0 717 590 B1**

(12) **EUROPÄISCHE PATENTSCHRIFT**

(45) Veröffentlichungstag und Bekanntmachung des Hinweises auf die Patenterteilung:
**18.06.1997 Patentblatt 1997/25**

(21) Anmeldenummer: **94924273.9**

(22) Anmeldetag: **22.07.1994**

(51) Int. Cl.$^6$: **A01K 1/12**

(86) Internationale Anmeldenummer:
**PCT/EP94/02418**

(87) Internationale Veröffentlichungsnummer:
**WO 95/07019 (16.03.1995 Gazette 1995/12)**

(54) **STEUER- UND ANTRIEBSEINRICHTUNG FÜR KARUSSELLMELKANLAGEN**

CONTROL AND DRIVE UNIT FOR CAROUSEL MILKING INSTALLATIONS

SYSTEME DE REGULATION ET D'ENTRAINEMENT POUR MANEGES DE TRAITE

(84) Benannte Vertragsstaaten:
**AT BE DE DK ES FR GB IT NL SE**

(30) Priorität: **11.09.1993 DE 4330894**

(43) Veröffentlichungstag der Anmeldung:
**26.06.1996 Patentblatt 1996/26**

(73) Patentinhaber: **Westfalia Separator AG**
**59302 Oelde (DE)**

(72) Erfinder:
• **OSTHUES, Uwe**
**D-58708 Menden (DE)**
• **WOHLBRÜCK, Ralf**
**D-59302 Oelde (DE)**
• **SCHULZE WARTENHORST, Bernhard**
**D-48231 Warendorf (DE)**

(56) Entgegenhaltungen:
**AT-A- 271 078**      **FR-A- 1 576 765**
**US-A- 3 934 551**

**Beschreibung**

Die Erfindung bezieht sich auf eine Steuer- und Antriebseinrichtung für Karussellmelkanlagen, mit einer Tiererkennungseinrichtung am Eingang und einer Überwachungseinrichtung am Ausgang der Melkanlage sowie einer variablen Drehzahl und einer Vielzahl von Melkplätzen, in denen bei den zu melkenden Tieren ein Melkzeug angesetzt und nach Beendigung des Melkvorganges automatisch abgezogen wird.

Derartige Karussellmelkanlagen sind beispielsweise bekannt aus der Druckschrift der Anmelderin "Melkanlagen", Nr. 9997-9287-020/0393 und dienen zur Erhöhung der Arbeitsproduktivität bei größeren Milchviehbeständen. Dabei lassen sich in der Regel Stundenleistungen pro Melkperson von mehr als 100 Tieren erreichen. Dies ist jedoch nur möglich, wenn die Melkbarkeit der Milchviehherde sehr ausgeglichen ist. Befinden sich auch nur einige langsam melkende Tiere in der Herde, so muß die Drehzahl der Karussellmelkanlage soweit reduziert werden, daß auch diese Tiere während einer Umdrehung des Melkkarussells ausgemolken werden. Dadurch ist die Durchsatzleistung pro Stunde geringer.

Bei den bekannten Karussellmelkanlagen ist die Drehzahl zwar veränderbar, doch wird man in der Praxis eine Drehzahl einstellen, mit der man die besten Erfahrungen gesammelt hat. Da das Melkpersonal in der Regel 2 bis 7 Stunden in dieser Anlage melken muß, läßt die Bereitschaft zu einer manuellen Veränderung der Drehzahl mit zunehmender Melkdauer nach. Während das Ansetzen des Melkzeuges manuell erfolgt, wird die Abnahme durch eine Abnahmevorrichtung bei nachlassendem Milchfluß automatisch ausgeführt. Damit kein Tier das Melkkarussell verlassen kann, bei dem das Melkzeug noch nicht abgenommen wurde, kann das Melkkarussell mit einem Karussellstop versehen sein, der das Melkkarussell zum Stillstand bringt, wenn kurz vor dem Ausgang des Melkkarussells ein Tier mit nicht abgenommenen Melkzeug ankommt. Nach dem Ausmelken des Tieres wird das Melkkarussell wieder manuell gestartet.

In der AT 271 078 wird eine Karussellmelkanlage beschrieben, bei der die Drehzahl der Melkanlage beeinflußt wird von den Überwachungseinrichtungen im Ein- und Ausgangsbereich der Melkanlage. Die Drehzahl wird dabei verringert, wenn Tiere diesen Bereich innerhalb einer vorbestimmten Zeit noch nicht verlassen haben. Diese Regelung dient dem Schutz der Tiere. Desweiteren wird in dieser Druckschrift vorgeschlagen, eine Überwachungseinrichtung für den Arbeitsplatz des Melkers vorzusehen, um eine Drehzahländerung vorzunehmen, wenn dieser seinen Arbeitsplatz verläßt. Bei den vorgeschlagenen Lösungen besteht aber weiterhin das Problem, daß die Drehzahl der Melkanlage in Abhängigkeit von den am langsamsten melkenden Tieren einzustellen ist.

Aus der FR-A-1 576 765 ist eine Karussellmelkanlage bekannt, bei der die Tiere beim Betreten der Anlage durch Signaleinrichtungen identifiziert werden, um ihnen eine individuelle Futterration zukommen zu lassen. Auch bei dieser Melkanlage wird die Drehzahl manuell so eingestellt, daß die Umlaufzeit ausreicht, um das am langsamsten melkende Tier mit Sicherheit auszumelken.

Der Erfindung liegt die Aufgabe zugrunde, eine Karussellmelkanlage zu schaffen, die sich in ihrer Drehgeschwindigkeit automatisch an die Melkzeit der auf dem Melkkarussell befindlichen Tiere anpaßt.

Diese Aufgabe wird dadurch gelöst, daß zur Überwachung der Melkzeugposition ein erster Kontrollpunkt sowie in Drehrichtung danach ein zweiter Kontrollpunkt vorgesehen sind und die Drehzahl des Melkkarussells von der Steuer- und Antriebseinrichtung so eingestellt wird, daß am ersten Kontrollpunkt die überwiegende Anzahl Melkzeuge noch nicht abgezogen und am zweiten Kontrollpunkt die überwiegende Anzahl Melkzeuge abgezogen sind.

Die Drehzahl des Melkkarussells läßt sich beispielsweise folgendermaßen regeln. An dem ersten Kontrollpunkt wird die Zeit $T_1$ und an dem zweiten Kontrollpunkt die Zeit $T_2$ ermittelt, die jeweils zwischen dem Vorbeifahren der letzten beiden noch nicht abgenommenen Melkplätze verstrichen ist. Da während der Fahrt vom ersten Kontrollpunkt zum zweiten Kontrollpunkt an einigen Melkplätzen das Melkzeug abgezogen wird, ist $T_1$ kleiner als $T_2$.

Durch Erhöhen der Drehzahl des Melkkarussells kann eine gewisse Grenzzeit $T_{GR}$ erreicht werden, wenn die Kontrollzeiten mit der sogenannten Melkplatzwechselzeit übereinstimmen. Bei einer aktuellen Umlaufzeit des Melkkarussells $T_{MK}$ und einer Anzahl von Melkplätzen $Z_{MP}$ errechnet sich die Grenzzeit zu $T_{GR} = T_{MK} : Z_{MP}$.

Durch folgenden Regelablauf kann eine maximale Auslastung des Melkkarussells unter Berücksichtigung der Melkbarkeit der Tiere erreicht werden. Bei einem Neustart, wenn die ersten Tiere das Karussell betreten, wird dieses auf die maximale Drehzahl hochgefahren, d. h. $T_{MK}$ und $T_{GR}$ werden minimal. Sobald $T_{GR} = T_1 = T_2$ erreicht ist, wird durch parametrisierbare Inkrementalschritte die Karusselldrehzahl derart angepaßt, daß $T_{GR}$ gleich oder kleiner $T_1$ und $T_1$ kleiner $T_2$ angestrebt wird.

Um einen flüssigen Ablauf des Melkvorganges zu gewährleisten, ist die relative Lage des ersten und zweiten Kontrollpunktes so anzuordnen, daß bei "normal melkenden" Tieren bei maximaler Karusselldrehzahl kein Karussellstop erforderlich ist.

Bei einer vorteilhaften Ausgestaltung sind weitere Kontrollpunkte in Drehrichtung nach dem zweiten Kontrollpunkt vorgesehen. An den Kontrollpunkten werden jeweils die zeiten $T_1$, $T_2$, $T_3$ usw. ermittelt, die zwischen dem Vorbeifahren der jeweils letzten zwei noch nicht abgenommenen Melkplätze verstrichen sind. Durch parametrisierbare Inkrementalschritte wird die Karussselldrehzahl derart angepaßt, daß $T_{GR}$ gleich oder kleiner $T_1$, $T_1$ kleiner $T_2$, $T_2$ kleiner $T_3$ usw. ange-

strebt wird. durch diese Anordnung ist eine feinfühligere Regelung der Karusselldrehzahl möglich.

Die Kontrollpunkte können mit Impulsgebern versehen sein, die durch das Melkzeug aktivierbar sind. Als Impulsgeber eignen sich beispielsweise Lichtschranken.

Bei einer vorteilhaften Ausgestaltung stehen die Kontrollpunkte mit Impulsgebern in Verbindung, die die automatische Abnahme der Melkzeuge bewirken. In diesem Fall sind keine speziellen Impulsgeber für die Abtastung des Melkzeuges im Euterbereich des Tieres erforderlich.

Bei einer weiteren vorteilhaften Ausgestaltung wird die Drehzahl des Melkkarussells durch eine Tiererkennungseinrichtung beeinflußt, die am Eingangsbereich des Melkkarussells vorgesehen ist und in der die tierindividuellen Melkzeiten gespeichert sind. Aus den gespeicherten Daten kann die mittlere Melkzeit der letzten Tage für jedes Tier entnommen werden. In Abhängigkeit von diesen Daten kann eine automatische Korrektur der eingestellten Drehzahl des Melkkarussells vorgenommen werden.

Die in der Tiererkennungseinrichtung gespeicherten Daten über die Melkzeit der Tiere können auch dazu genutzt werden, den zweiten Kontrollpunkt, an dem das Melkzeug in dem vorbeifahrenden Melkplatz abgenommen sein muß, tierindividuell durch die Einrichtung zu variieren. Die Position des zweiten Kontrollpunktes wird dabei nur elektronisch in der Einrichtung fixiert und als Impuls ein Signal aus der automatischen Abnahmevorrichtung benutzt.

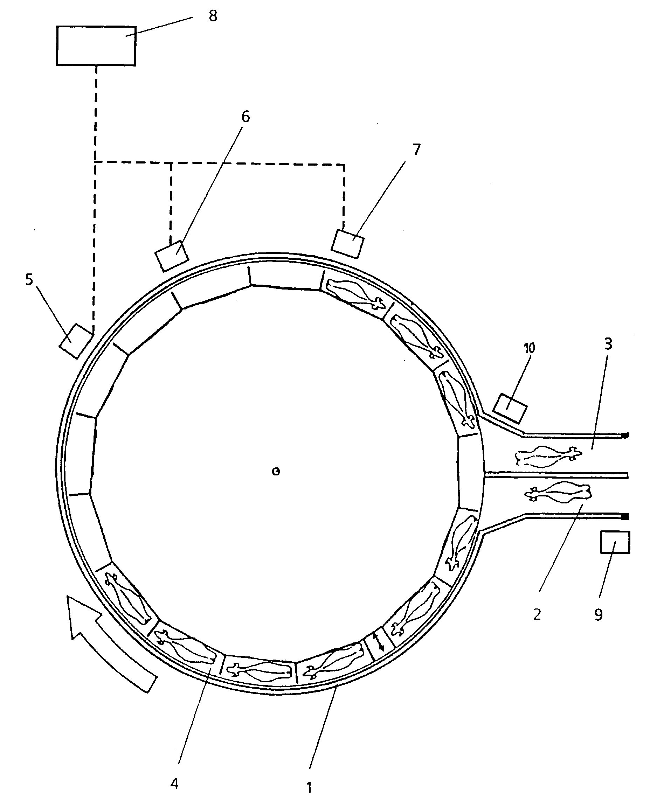

Ein Ausführungsbeispiel der Erfindung ist in der Zeichnung dargestellt und wird nachstehend näher erläutert.

Mit 1 ist in der Fig. das Melkkarussell bezeichnet, das mit einem Eingang 2, einem Ausgang 3 und einer Vielzahl von Melkplätzen 4 versehen ist. Am Melkkarussell 1 ist ein erster Kontrollpunkt 5, ein zweiter Kontrollpunkt 6 und ein dritter Kontrollpunkt 7 angeordnet, die mit einer Steuer- und Antriebseinrichtung 8 in Verbindung stehen. Eine Tiererkennungseinrichtung 9 ist am Eingang 2 und eine Überwachungseinrichtung 10 am Ausgang 3 des Melkkarussells 1 vorgesehen.

Die Funktion der Steuer- und Antriebseinrichtung wird nachfolgend an Beispielen erläutert.

Beispiel 1

Wenn die Tiererkennungseinrichtung 9 nicht für die Regelung der Karusselldrehzahl mitbenutzt wird, so wird zunächst die maximale Drehzahl eingestellt. Die Tiere betreten das Karussell über den Eingang 2 und die Melkzeuge werden unmittelbar danach durch die Melkperson angesetzt. Wenn das erste Tier am zweiten Kontrollpunkt 6 ankommt, wird festgestellt, ob die Melkzeuge nicht abgenommen sind. Dies kann durch eine Lichtschranke erfolgen, die durch die Melkzeuge selbst oder durch bewegliche Blenden betätigt wird, die an den Abnahmevorrichtungen vorgesehen sind. Falls die Melkzeuge noch nicht abgenommen sind, wird die Drehzahl stufenweise abgesenkt, bis bei den folgenden Melkplätzen die Abnahme der Melkzeuge erreicht wird. Sobald auch vom ersten Kontrollpunkt 5 die Meldung kommt, daß die Melkzeuge bereits abgezogen sind, wird die Drehzahl wieder erhöht, bis auch am zweiten Kontrollpunkt 6 Tiere mit nicht abgezogenen Melkzeugen gemeldet werden. Dann wird die Drehzahl wieder abgesenkt. Dieser Steuervorgang wiederholt sich im steten Wechsel.

Beispiel 2

Wird der dritte Kontrollpunkt 7 mitbenutzt, so wird die Karusselldrehzahl so geregelt, daß den Kontrollpunkt 7 stets mehr abgenommene Melkplätze 4 passieren als den Kontrollpunkt 6.
Um eine noch feinfühligere Regelung zu erreichen, können weitere Kontrollpunkte einbezogen werden. Dann wird analog mit Bezug auf den jeweils vorliegenden Kontrollpunkt verfahren.

Beispiel 3

Bei aktiver Tiererkennungseinrichtung 9 wird jedes Tier im Eingang 2 erfaßt und die durchschnittliche Melkzeit in der Steuer- und Antriebseinrichtung 8 gespeichert. Aus den gespeicherten Werten aller auf dem Melkkarussell 1 befindlichen Tiere ermittelt die Steuer- und Antriebseinrichtung 8 die durchschnittliche Gesamtmelkzeit dieser Tiere und errechnet daraus die optimale Drehzahl des Melkkarussells 1. Gleichzeitig wird eine Position am Umfang des Melkkarussells 1 elektronisch bestimmt, an der das Melkzeug abgenommen sein muß. Der Impuls dazu kommt in diesem Fall von der Melkzeugabnahmevorrichtung. Durch diese Steuerung ist eine sehr genaue Anpassung der Drehzahl an die tatsächliche Melkzeit der Tiere möglich.

Bleibt ein Tier im Ausgang 3 stehen, so wird durch die Überwachungseinrichtung 10 das Melkkarussell 1 gestoppt.

**Patentansprüche**

1. Steuer- und Antriebseinrichtung für Karussellmelkanlagen, mit einer Tiererkennungseinrichtung (9) am Eingang (2) und einer Überwachungseinrichtung (10) am Ausgang (3) der Melkanlage sowie einer variablen Drehzahl und einer Vielzahl von Melkplätzen (4), in denen bei den zu melkenden Tieren ein Melkzeug angesetzt und nach Beendigung des Melkvorganges automatisch abgezogen wird, **dadurch gekennzeichnet**, daß zur Überwachung der Melkzeugposition ein erster Kontrollpunkt (5) sowie in Drehrichtung danach ein zweiter Kontrollpunkt (6) vorgesehen sind und die Drehzahl des Melkkarussells (1) von der Steuer- und Antriebseinrichtung (8) so eingestellt wird, daß am ersten Kontrollpunkt (5) die überwiegende Anzahl Melkzeuge noch nicht abgezogen und am zweiten Kontrollpunkt (6) die überwiegende Anzahl Melkzeuge abgezogen sind.

2. Steuer- und Antriebseinrichtung nach Anspruch 1, dadurch gekennzeichnet, daß mindestens ein weiterer Kontrollpunkt (7) in Drehrichtung nach dem zweiten Kontrollpunkt (6) vorgesehen ist und die Drehzahl des Melkkarussells (1) von der Steuer- und Antriebseinrichtung (8) so eingestellt wird, daß am ersten Kontrollpunkt (5) die Melkzeuge noch nicht und am dritten Kontrollpunkt (7) mehr Melkzeuge als am zweiten Kontrollpunkt (6) abgezogen sind.

3. Steuer- und Antriebseinrichtung nach Anspruch 1 oder 2, dadurch gekennzeichnet, daß die Kontrollpunkte (5, 6, 7) mit Impulsgebern versehen sind, die durch die Melkzeuge aktiviert werden.

4. Steuer- und Antriebseinrichtung nach Anspruch 1 oder 2, dadurch gekennzeichnet, daß die Kontrollpunkte (5, 6, 7) mit einem Impulsgeber in Verbindung stehen, der die automatische Abnahme der Melkzeuge bewirkt.

5. Steuer- und Antriebseinrichtung nach einem der Ansprüche 1 bis 4, dadurch gekennzeichnet, daß die Drehzahl des Melkkarussells (1) durch die Tiererkennungseinrichtung (9) beeinflußbar ist, in der die tierindividuellen Melkzeiten gespeichert sind.

6. Steuer- und Antriebseinrichtung nach Anspruch 5, dadurch gekennzeichnet, daß die Drehzahl des Melkkarussells (1) durch die Tiererkennungseinrichtung (9) derart beeinflußbar ist, daß die Position des zweiten Kontrollpunktes (6), an dem das Melkzeug in dem vorbeifahrenden Melkplatz (4) abgenommen sein muß, durch die Steuer- und Antriebseinrichtung (8) tierindividuell variiert wird.

## Claims

1. Control and actuating system for rotary milking parlours, with an animal identification system (9) at entrance (2) and a monitoring unit (10) at exit (3) of the milking installation as well as a variable speed and a large number of milking places (4) in which a milking cluster is applied to the animals to be milked and automatically removed at the end of the milking process, **characterised in that**, for the purpose of monitoring the milking cluster position, a first checkpoint (5) is foreseen followed by a second checkpoint (6) in the direction of rotation and in that the speed of the rotary milking parlour (1) is set by the control and actuating system (8) such that the majority of milking clusters has not been removed at the first checkpoint (5) and that the majority of milking clusters has been removed at the second checkpoint (6).

2. Control and actuating system according to claim 1, characterised in that at least one further checkpoint (7) is located after the second checkpoint (6) in the direction of rotation and the speed of the rotary milking parlour (1) is set by the control and actuating system (8) such that the milking clusters have not yet been removed at the first checkpoint (5) and at the third checkpoint (7) more milking clusters have been removed than at the second checkpoint (6).

3. Control and actuating system according to claim 1 or 2, characterised in that the checkpoints (5, 6, 7) are provided with pulse transmitters which are activated by the milking clusters.

4. Control and actuating system according to claim 1 or 2, characterised in that the checkpoints (5, 6, 7) are connected to a pulse transmitter which effects automatic removal of the milking clusters.

5. Control and actuating system according to one of the claims 1 to 4, characterised in that the speed of the rotary milking parlour (1) can be influenced by the animal identification system (9) in which the individual animal milking times are stored.

6. Control and actuating system according to claim 5, characterised in that the speed of the rotary milking parlour (1) can be influenced by the animal identification system (9) to such an extent that the position of the second checkpoint (6), at which the milking cluster must be removed in the passing milking place (4), is varied by the control and actuating system (8) to suit the individual animal.

## Revendications

1. Système de commande et d'entraînement pour manèges de traite, comportant un dispositif d'identification des animaux (9) prévu à l'entrée (2) et un dispositif de surveillance (10) en sortie (3) de l'installation de traite, avec vitesse de rotation variable et un grand nombre de postes de traite (4), dans lesquels les faisceaux trayeurs sont appliqués aux animaux et en décrochés en fin de la traite, **caractérisé en ce que**, pour surveiller la position du faisceau, un premier point de contrôle (5) et, vu dans le sens de rotation du manège, un point de contrôle suivant (6) sont prévus, la vitesse de rotation du manège de traite (1) étant réglée à partir du système de commande et d'entraînement (8) de telle manière que, au niveau du premier point de contrôle (5), la plupart des faisceaux ne soient pas encore décrochés et que, au niveau du deuxième point de contrôle (6), la plupart des faisceaux soient décrochés.

2. Système de commande et d'enraînement selon la revendication 1, caractérisé en ce qu'au moins un troisième point de contrôle (7) est disposé après le deuxième point de contrôle (6) vu en direction de rotation, et que la vitesse de rotation du manège de traite (1) est réglée à partir du système de commande et d'entraînement (8) de telle manière qu'au niveau du premier point de contrôle (5) la plupart des faisceaux trayeurs ne soient pas encore décrochés et que, au niveau du troisième point de contrôle (7), plus de faisceaux soient décrochés que ne sont au niveau du deuxième point de contrôle (6).

3. Système de commande et d'enraînement selon l'une des revendications 1 ou 2, caractérisé en ce que les points de contrôle (5, 6, 7) sont munis de détecteurs de proximité activés par les faiscaux.

4. Système de commande et d'enraînement selon l'une des revendications 1 ou 2, caractérisé en ce que les points de contrôle (5, 6, 7) sont reliés à un transmetteur d'impulsions provoquant le décrochage automatique des faisceaux.

5. Système de commande et d'enraînement selon l'une des revendications 1 à 4, caractérisé en ce que la vitesse de rotation du manège de traite (1) se laisse influencer à partir du dispositif d'identification d'animaux (9) dans lequel les temps de traite individuels sont mémorisés pour chaque animal.

6. Système de commande et d'enraînement selon la revendication 5, caractérisé en ce que la vitesse de rotation du manège de traite (1) se laisse influencer à partir du dispositif d'identification d'animaux (9) de telle manière que la position du deuxième point de contrôle (6) au niveau duquel le faisceau du poste de traite passant (4) doit être décroché, est réglée individuellement pour chaque animal à partir du système de commande et d'enraînement (8).